# EUROPÄISCHE PATENTSCHRIFT

(11) **EP 0 922 618 B1**
(45) Veröffentlichungstag und Bekanntmachung des Hinweises auf die Patenterteilung: **11.04.2007**
(21) Anmeldenummer: 98118970.7
(22) Anmeldetag: 07.10.1998
(51) Int. Cl.: B60T 8/00

(54) **Fahrzeugbremsanlage**
Vehicle brake device
Dispositif de freinage pour véhicule

(30) Priorität: 13.12.1997 DE 19755431
(43) Veröffentlichungstag der Anmeldung: 16.06.1999
(73) Patentinhaber: WABCO GmbH, 30453 Hannover (DE)
(72) Erfinder: Reich, Thomas, 30451 Hannover (DE); Franke, Torsten, 30459 Hannover (DE); Gläbe, Klaus, 30161 Hannover (DE); Koschorek, Ralf, 30952 Ronnenberg (DE); Klein, Bodo, 30890 Barsinghausen (DE); Wiehen, Christian, Dr., 64646 Heppenheim (DE); Petersen, Erwin, Dr., 31515 Wunstorf (DE)
(74) Vertreter: Schrödter, Manfred

(56) Entgegenhaltungen:
- DE-A- 4 228 893
- DE-C- 19 521 175
- DEBES M ET AL: "DYNAMISCHE STABILITAETS CONTROL DSC DER BAUREIHE 7 VON BMV - TEIL 1" ATZ AUTOMOBILTECHNISCHE ZEITSCHRIFT,DE,FRANCKH'SCHE VERLAGSHANDLUNG. STUTTGART, Bd. 99, Nr. 3, 1. März 1997 (1997-03-01), Seiten 134-136,138-14, XP000682345 ISSN: 0001-2785
- JONNER WOLF-DIETER ET AL: "Electrohydraulic Brake System - The First Approach to Brake-By-Wire Technology" SAE TRANSACTIONS,US,SOCIETY OF AUTOMOTIVE ENGINEERS, INC., WARRENDALE, PA, Bd. 105, Nr. 6, Seite 1368-1375-1375 XP002103413 ISSN: 0096-736X
- DATABASE COMPENDEX [Online] ENGINEERING INFORMATION, INC., NEW YORK, NY, US LUTZ M ET AL: "A precision yaw rate sensor in silicon micromachining" Database accession no. EIX97503882685 XP000870349 & PROCEEDINGS OF THE 1997 INTERNATIONAL CONFERENCE ON SOLID-STATE SENSORS AND ACTUATORS. PART 2 (OF 2);CHICAGO, IL, USA JUN 16-19 1997, Bd. 2, 1997, Seiten 847-850, Int Conf Solid State Sensors Actuators Proc;International Conference on Solid-State Sensors and Actuators, Proceedings 1997 IEEE, Piscataway, NJ, USA

## Beschreibung

Die Erfindung betrifft eine Fahrzeugbremsanlage nach dem Oberbegriff des Patentanspruchs 1.

Eine solche Fahrzeugbremsanlage ist aus der EP 0 798 615 A1 bekannt. Deren Bremselektronik werden der Bremsbetätigungswunsch des Fahrers und die von ihm geforderte Bremswirkung in Gestalt des Bremswertsignals zugeführt, und die Bremselektronik steuert die Betätigung der Fahrzeugbremsanlage so, daß diese die Forderungen des Fahrers erfüllt. Für eine so ausgebildete Fahrzeugbremsanlage ist die Kurzbezeichnung "EBS" gebräuchlich, die auch in der genannten EP-Veröffentlichung verwendet wird.

Häufig ist die Bremselektronik so ausgebildet, daß sie auch ein richtungsstabiles Bremsverhalten des Fahrzeugs sowie eine gleichmäßige Bremsabnutzung und/oder einen Blockierschutz der Fahrzeugräder sicherstellt. Dabei verarbeitet die Bremselektronik weitere Signale, z.B. die Raddrehzahlsignale, die ihr von Sensoren der Bremsanlage, beispielsweise Raddrehzahlsensoren, und/oder über den Fahrzeug-Datenbus zugeführt werden. Außerdem ist es üblich, die Bremselektronik so auszubilden, daß sie die Betätigung der Bremsanlage zur Antriebsschlupf-Regelung steuert, wenn die Raddrehzahlsensoren eine Durchdrehneigung an wenigstens einem angetriebenen Rad signalisieren (ASR).

Der Fahrdynamikelektronik der Fahrzeugbremsanlage werden die Raddrehzahlsignale sowie die Signale des Lenkwinkelsensors, des Giergeschwindigkeitssensors und des Querbeschleunigungssensors zugeführt. Nach Maßgabe dieser Signale überwacht die Fahrdynamikelektronik in jedem Fahrzustand des Fahrzeugs dessen Querstabilität, mit anderen Worten: dessen Schleuderneigung, und steuert die Fahrzeugbremsanlage so bzw. greift so in deren Steuerung durch die Bremselektronik ein, daß sie stets eine optimale Querstabilität des Fahrzeugs sicherstellt.

Die bereits genannte EP-Veröffentlichung beschreibt die physikalischen Grundlagen und die grundsätzliche Wirkungweise einer Fahrzeugbremsanlage der eingangs genannten Art, ohne jedoch auf Lösungsansätze und Anordnungsmöglichkeiten der zur Realisierung der Bremsanlage erforderlichen Komponenten einzugehen.

Der Erfindung liegt die Aufgabe zugrunde, vorteilhafte Lösungen und Anordnungen dieser Komponenten anzugeben.

Diese Aufgabe wird durch die in dem Patentanspruch 1 angegebene Erfindung gelöst. Vorteilhafte Ausgestaltungen und Fortbildungen sind in den Unteransprüchen angegeben.

Weitere Vorteile der Erfindung werden in deren folgender Erläuterung anhand zeichnerisch dargestellter Ausführungsbeispiele angegeben. Unter durchgehender Verwendung gleicher Bezugszeichen für funktionsgleiche Komponenten sowie dicker Striche für Druckluftleitungen und dünner Striche für elektrische Steuer- bzw. Signalleitungen zeigen
- Fig. 1: schematisch eine Fahrzeugbremsanlage,
- Fig. 2: ausschnittsweise eine Fortbildung der Anlage nach Fig. 1,
- Fig. 3: schematisch eine andere Fahrzeugbremsanlage,
- Fig. 4: ausschnittsweise Fortbildungen der
- Fig. 5: Anlage nach Fig. 3,
- Fig. 6: schematisch eine weitere Fahrzeugbremsanlage.

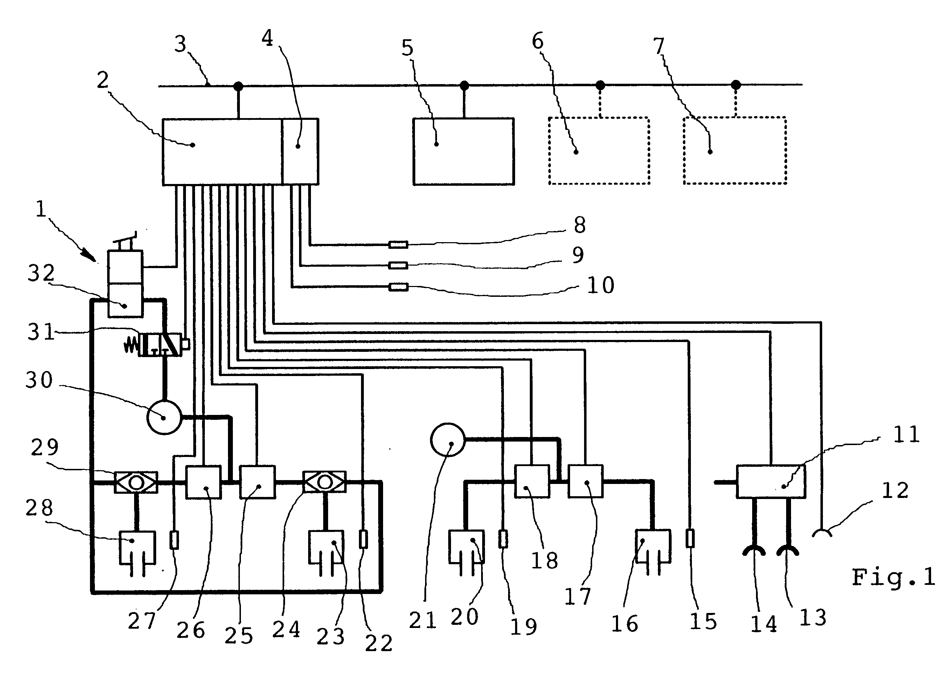

In Fig. 1 bilden ein elektrischer Bremswertgeber (1), eine Bremselektronik (2), Druckluftspeicher (21, 30), Bremsdruckmodulatoren (17, 18, 25, 26), Vorderachs-Radbremsen (23, 28) und Hinterachs-Radbremsen (16, 20) eine elektrisch steuerbare Fahrzeugbremsanlage, die im folgenden mit der üblichen Kurzbenennung "EBS" bezeichnet wird. Je nach Ausgestaltung der EBS können zu dieser noch Sensoren, beispielsweise Bremsdrucksensoren, Raddrehzahlsensoren, Lastsensoren, Verschleißsensoren, gehören. Auch gibt es Ausgestaltungen der EBS, in denen die Bremselektronik Daten bzw. Signale aus einer oder mehreren Fahrzeugelektroniken, z. B. Lastdaten, verarbeitet, die ihr über den Fahrzeug-Datenbus (3) zugeführt werden. Solche Fahrzeugelektroniken sind durch Rechtecke (5, 6, 7) symbolisiert.

Für den Fall, daß das mit der EBS ausgerüstete Fahrzeug im Anhängerbetrieb einsetzbar sein soll, ist die EBS noch mit einem elektrisch steuerbaren Anhängersteuerventil (11), Druckluft-Kupplungsköpfen (13, 14) und einer elektrischen Kupplung (12) versehen. Über diese Einrichtungen, die auch als Kundenwunsch-Ausrüstung vorgesehen sein können, kann eine Anhängerbremsanlage in herkömmlicher Zweileitungs-Bauart und/oder in elektrisch steuerbarer Ausführung mitgesteuert werden. Im letzteren Fall muß die elektrische Kupplung (12) als Datenbus-Schnittstelle ausgeführt sein.

Zur Versorgung der Fahrzeugbremsanlage mit als Betätigungsenergie dienender Druckluft ist das Fahrzeug mit einer in bekannter Weise aufgebauten und deshalb nicht dargestellten Druckerzeugungs- und Druckluftaufbereitungsanlage ausgerüstet.

Eine solche Fahrzeugbremsanlage ist aus der DE 195 10 933 A1 bekannt.

Die zeichnerisch als Scheibenbremsen angedeuteten Radbremsen (16, 20, 23, 28) sind an der jeweils zugeordneten Fahrzeugachse auf die Fahrzeugseiten verteilt.

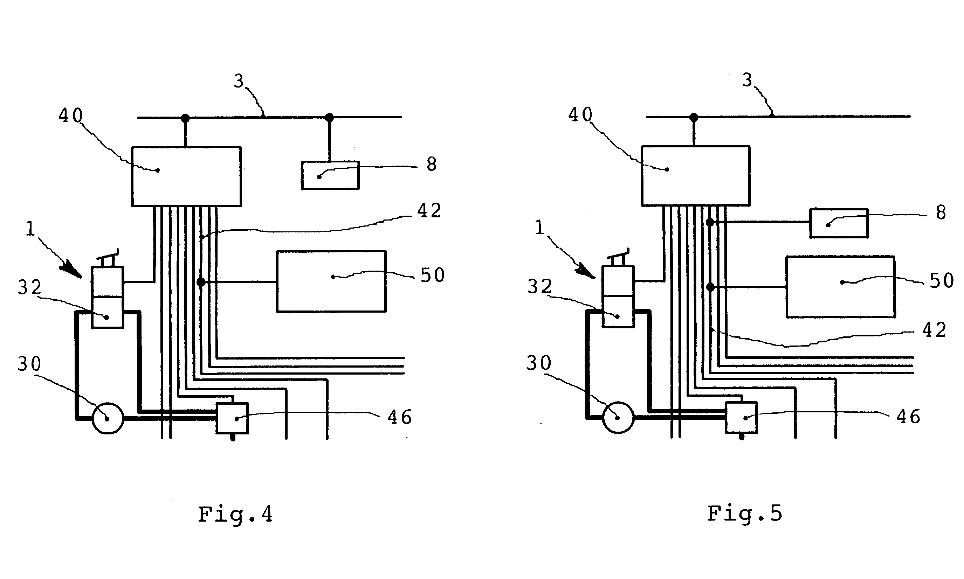

Die Vorderachs-Radbremsen (23, 28) sind bei Störungen der EBS über vorgeschaltete Zweiwegeventile (24, 29) mittels eines Umschaltventils (31), für welches die Bezeichnung "Redundanzventil" gebräuchlich ist, durch einen Druckteil (32) des Bremswertgebers (1) betätigbar. Einzelheiten eines solchen Notbremskreises sind beispielsweise in der DE 39 16 642 A1 (dort z. B. bei Fig. 5) beschrieben. Ein entsprechend aufgebauter Notbremskreis kann auch für die Hinterachs-Radbremsen (16, 20) vorgesehen sein.

In die Bremselektronik (2) sind die Funktionen "Blckkierschutz" und "Antriebsschlupfregelung" integriert, für welche nachstehend die üblichen Kurzbezeichnungen "ABS" und "ASR" verwendet werden. Zu diesen Zwecken, wenn nicht schon zu EBS-Zwecken, werden der Bremselektronik (2) Raddrehzahlsignale von Raddrehzahlsensoren (15, 19, 22, 27) zugeführt. Im ASR-Betrieb kann die Bremselektronik (2) über den Fahrzeug-Datenbus (3) auch Steuersignale an die Motor-Steuerelektronik (5) abgeben. Als für den ABS-Betrieb und den ASR-Betrieb erforderliche Regelventile dienen die Bremsdruckmodulatoren (17, 18, 25, 26).

Die Druckspeicher (21, 30), die Radbremsen (16, 20, 23, 28) und die Raddrehzahlsensoren (15, 19, 22, 27) sind auch Bestandteile eines Fahrdynamik-Regelsystems, zu dem außerdem eine Fahrdynamikelekronik (4), ein Lenkwinkelsensor (8), ein Giergeschwindigkeitssensor (9) und ein Querbeschleunigungssensor (10) gehören. Aufgabe des Fahrdynamik-Regelsystems ist, beim Auftreten eines instabilen Fahrzustands des Fahrzeugs bzw., falls Anhängerbetrieb vorliegt, des Fahrzeugzuges, mit anderen Worten beim Auftreten einer Schleuderneigung, auch au-ßerhalb von Bremsbetätigungen durch gezielte Betätigung einzelner oder mehrerer Radbremsen, gegebenenfalls und/oder der Anhängerbremsanlage, Giermomente zu erzeugen, welche die Bewegung des Fahrzeugs bzw. des Fahrzeugzuges stabilisieren. Über den Fahrzeug-Datenbus (3) kann die Fahrdynamikelektronik (4) auch Steuersignale an die Motor-Steuerelektronik (5) abgeben.

Einzelheiten der Wirkungsweise des Fahrdynamik-Regelsystems sind in der eingangs erwähnten EP 0 798 615 A1 sowie im Sonderdruck aus ATZ Automobiltechnische Zeitschrift 96 (1994) Heft 11 "Das neue Fahrsicherheitssystem Electronic Stability Program von Mercedes-Benz" beschrieben.

Erfindungsgemäß sind in Fig. 1 die Fahrdynamikelektronik (4) in die Bremselektronik (2) integriert und der Lenkwinkelsensor (8), der Giergeschwindigkeitssensor (9) und der Querbeschleunigungssensor (10) als selbständige Baueinheiten vorgesehen. Zwecks Integration der Fahrdynamikelektronik (4) ist die Bremselektronik (2) mit zusätzlichen Eingängen für die speziellen Sensoren des Fahrdynamik-Regelsystems ausgerüstet.

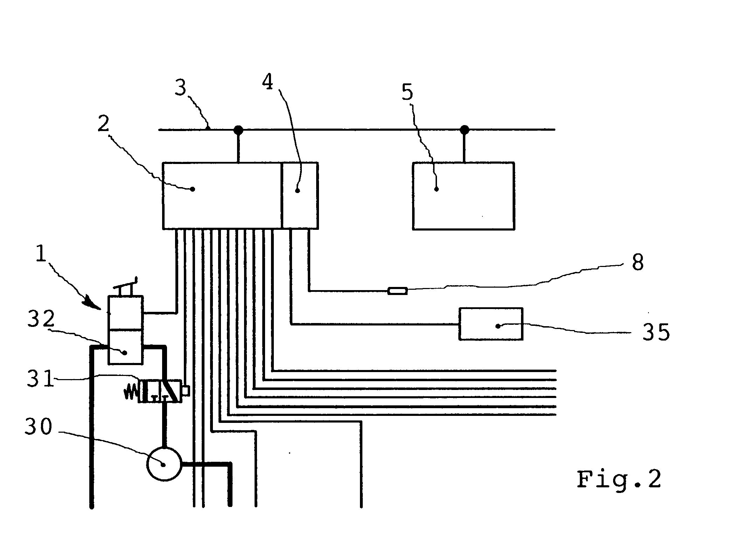

Fig. 2 zeigt einen Ausschnitt aus einer Fahrzeugbremsanlage, in der der Giergeschwindigkeitssensor und der Querbeschleunigungssensor zu einem Sensormodul (35) zusammengefaßt sind. Beide Sensoren können dabei in einem gemeinsamen Gehäuse angeordnet sein. Der Sensormodul kann auch, beispielsweise in dem gemeinsamen Gehäuse, die gemeinsame elektrische Versorgung und eine etwa erforderliche Schutzschaltung umfassen. Diese Zusammenfassung der genannten Sensoren und ihre Ausgestaltungen stellen kosten- und raumsparende Lösungen dar.

Im übrigen entspricht diese Fahrzeugbremsanlage derjenigen nach Fig. 1.

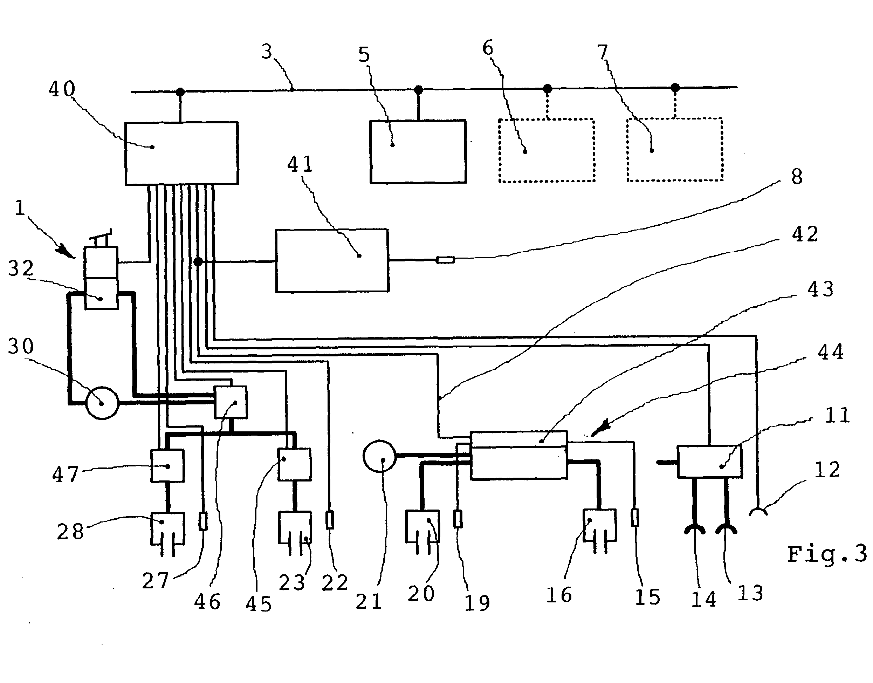

In Fig. 3 sind die Bremsdruckmodulatoren der Fig. 1 an der Hinterachse durch einen Achsmodulator (44) und an der Vorderachse durch einen Kombi-Bremsdruckmodulator (46) sowie ABS-Regelventile (45, 47) ersetzt. Die in diesem Falle mit 40, 43 zu bezeichnende Bremselektronik ist auf einen Zentralmodul (40) und einen Achsmodul (43) aufgeteilt.

In dem Achsmodulator (44) sind der Achsmodul (43) und die den Hinterachs-Radbremsen (16, 20) zugeordneten Bremsdruckmodulatoren zusammengefaßt. In den Achsmodul (43) sind Teile der Bremselektronik (40, 43) verlagert, insbesondere solche Teile, die den Hinterachs-Radbremsen (16, 20) zugeordnet sind. Der Zentralmodul (40) und der Achsmodul (43) sind über einen EBS-Systembus (42) miteinander verbunden. Eine solche EBS mit "verteilter Intelligenz" ist in der EP 0 467 112 A2 beschrieben. Allerdings ist dort der Achsmodulator in Radmodulatoren für die einzelnen Radbremsen aufgeteilt.

Der Kombi-Bremsdruckmodulator (46) an der Vorderachse ist sowohl von der Bremselektronik (40, 43) als auch von dem Druck steuerbar, welchen der Druckteil (32) des Bremswertgebers (1) liefert. Ein solcher Kombi-Bremsdruckmodulator und sein Zusammenwirken mit ABS-Regelventilen sind aus der DE 40 16 463 A1 bekannt. Ein Redundanzventil ist bei dieser Lösung nicht erforderlich. Diese Funktion nimmt der Kombi-Bremsdruckmodulator (46) mit wahr.

In dieser Fahrzeugbremsanlage ist die Fahrdynamikelektronik (41) als selbständige Baueinheit vorgesehen, in die der Giergeschwindigkeitssensor und der Querbeschleunigungssensor integriert sind. Der Lenkwinkelsensor (8), dessen Einbauort durch seine Funktion im Bereich der Lenksäule des Fahrzeugs festgelegt ist, ist mit der Fahrdynamikelektronik (41) verbunden. Die Fahrdynamikelektronik (41) ist andererseits an den EBS-Systembus (42) angeschlossen und kann über diesen und die Bremselektronik (40, 43) auf die Radbremsen und desweiteren über den Fahrzeug-Datenbus (3) auf die Motor-Steuerelektronik (5) einwirken. Soll bei dieser Fahrzeugbremsanlage von der Fahrdynamikelektronik oder im ASR-Betrieb eine Vorderachs-Radbremse (23 bzw. 28) betätigt werden, so ist dazu die Steuerung des Kombi-Bremsdruckmodulators (46) und die Schaltung des der anderen Vorderachs-Radbremse (28 bzw. 23) zugeordneten ABS-Regelventils (47 bzw. 45) in seine Druckhalte- oder Druckabbaustellung erforderlich.

Fig. 4 zeigt einen Ausschnitt aus einer Fahrzeugbremsanlage, in der der Lenkwinkelsensor (8) an den Fahrzeug-Datenbus (3) angeschlossen ist. Die Lenkwinkelsignale werden in diesem Fall der mit (50) bezeichneten Fahrdynamikelektronik über den Fahrzeug-Datenbus (3) und die Bremselektronik (40, 43), insbesondere deren Zentralmodul (40), zugeführt. In der Regel wird der Lenkwinkelsensor (8) in diesem Fall mit einer Schaltung zur Signalaufbereitung und zum Betrieb der Kommunikation über den Fahrzeug-Datenbus (3) zu einem Lenkwinkelsensormodul zusammengefaßt sein.

Im übrigen entspricht diese Fahrzeugbremsanlage derjenigen nach Fig. 3.

In Fig. 5 ist der Lenkwinkelsensor (8), anders in Fig. 4, an den EBS-Systembus (42) angeschlossen.

Im übrigen entspricht diese Bremsanlage derjenigen nach Fig. 4.

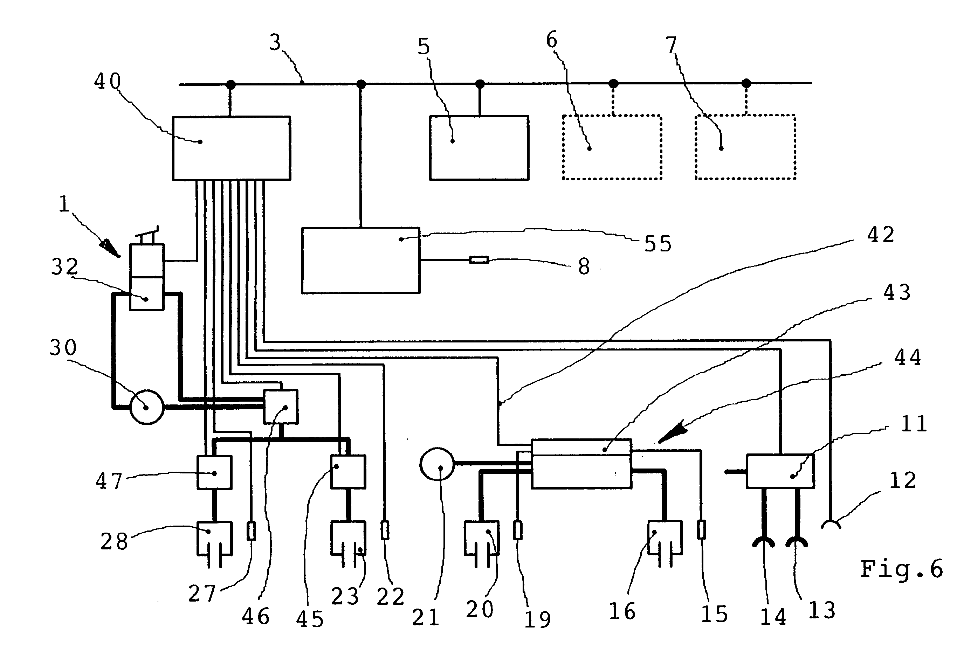

Fig. 6 zeigt eine Fahrzeugbremsanlage, in der in die mit (55) bezeichnete Fahrdynamikelektronik wie bei Fig. 3 der Giergeschwindigkeitssensor und der Querbeschleunigungssensor integriert sind. Anders als bei Fig. 3 ist die Fahrdynamikelektronik (55) an den Fahrzeug-Datenbus (3) angeschlossen.

Im übrigen entspricht diese Bremsanlage derjenigen nach Fig. 3.

Die Ausgestaltungen nach den Fig. 3, 4, 5 und 6 ermöglichen eine kosten- und raumsparende Erweiterung einer etwa serienmäßig vorhandenen EBS um ein Fahrdynamik-Regelsystem ganz ohne oder mit unwesentlichen Eingriffen in die Bremselektronik.

Für alle Ausführungsbeispiele und Ausgestaltungen gilt, daß über den Fahrzeug-Datenbus (3) außer der Motor-Steuerelektronik (5) auch anderen Fahrzeugelektroniken Daten des Fahrzeugdynamik-Regelsystems zugeführt werden können und umgekehrt die Fahrdynamikelektronik Daten anderer Fahrzeugelektroniken, z. B. Wankwinkel, zur Optimierung der Fahrstabilitätsregelung erhalten kann.

Der Fachmann erkennt, daß die vorstehend zu einem Ausführungsbeispiel bzw. einer Ausgestaltung gemachten Ausführungen für die anderen Ausführungsbeispiele bzw. Ausgestaltungen direkt oder in entsprechender Anwendung mitgelten, sofern sich aus diesen Ausführungen nichts Widersprechendes ergibt.

Der Fachmann erkennt auch, daß sich der Schutzbereich der Erfindung nicht in den Ausführungsbeispielen erschöpft, sondern alle Ausführungen umfaßt, deren Merkmale sich den Patentansprüchen unterordnen.

## Patentansprüche

1. Fahrzeugbremsanlage, die von einer Bremselektronik (40, 43) wenigstens nach Maßgabe eines von dem Fahrer erzeugten Bremswertsignals und von einer Fahrdynamikelektronik (41) nach Maßgabe von Raddrehzahlsignalen sowie von Signalen eines Lenkwinkelsensors (8), eines Giergeschwindigkeitssensors und eines Querbeschleunigungssensors steuerbar ist, wobei die Bremselektronik (40, 43) über einen Fahrzeug-Datenbus (3) wenigstens mit einer Motor-Steuerelektronik (5) verbunden ist,
**dadurch gekennzeichnet,**
**daß** der Giergeschwindigkeitssensor und der Querbeschleunigungssensor in die Fahrdynamikelektronik (41) integriert sind.

2. Fahrzeugbremsanlage nach Anspruch 1,
**dadurch gekennzeichnet,**
**daß** der Lenkwinkelsensor (8) an den Fahrzeug-Datenbus (3) angeschlossen ist.

3. Fahrzeugbremsanlage nach Anspruch 1,
**dadurch gekennzeichnet**
**daß** der Lenkwinkelsensor (8) an einen Systembus (42) der Bremselektronik (40, 43) angeschlossen ist.

4. Fahrzeugbremsanlage nach Anspruch 1,
**dadurch gekennzeichnet,**
**daß** der Giergeschwindigkeitssensor und der Querbeschleunigungssensor zu einem Sensormodul (35) zusammengefaßt sind.

5. Fahrzeugbremsanlage nach Anspruch 1,
**dadurch gekennzeichnet,**
**daß** die Fahrdynamikelektronik (4) in die Bremselektronik (2) integriert ist.

## Claims

1. Vehicle braking system which is arranged to be controlled by a braking electronics unit (40, 43) at least on the basis of a driver-produced braking value signal and by a driving dynamics electronics unit (41) on the basis of wheel speed-of-rotation signals and of signals from a steering angle sensor (8), from a yaw speed sensor and from a transverse acceleration sensor, the braking electronics unit (40, 43) being connected by way of a vehicle data bus (3) at least to a motor control electronics unit (5),
**characterised in that**
the yaw speed sensor and the transverse acceleration sensor are integrated into the driving dynamics electronics unit (41).

2. Vehicle braking system according to claim 1,
**characterised in that**
the steering angle sensor (8) is connected to the vehicle data bus (3).

3. Vehicle braking system according to claim 1,
**characterised in that**
the steering angle sensor (8) is connected to a system bus (42) of the braking electronics unit (40, 43).

4. Vehicle braking system according to claim 1,
**characterised in that**
the yaw speed sensor and the transverse acceleration sensor are combined to form a sensor module (35).

5. Vehicle braking system according to claim 1,
**characterised in that**
the driving dynamics electronics unit (4) is integrated into the braking electronics unit (2).

## Revendications

1. Dispositif de freinage pour véhicule, qui peut être commandé par une électronique de freinage (40, 43) au moins selon un signal de valeur de freinage généré par le conducteur et par une électronique de dynamique de conduite (41) selon des signaux de vitesse de rotation des roues, ainsi que par des signaux d'un capteur d'angle de braquage (8), d'un capteur de vitesse de lacet et d'un capteur d'accélération transversale, l'électronique de freinage (40, 43) étant reliée au moins à une électronique de commande du moteur (5) par l'intermédiaire d'un bus de données (3) du véhicule,
**caractérisé en ce que**
le capteur de vitesse de lacet et le capteur d'accélération transversale sont intégrés dans l'électronique de dynamique de conduite (41).

2. Dispositif de freinage pour véhicule selon la revendication 1, **caractérisé en ce que** le capteur d'angle de braquage (8) est raccordé au bus de données (3) du véhicule.

3. Dispositif de freinage pour véhicule selon la revendication 1, **caractérisé en ce que** le capteur d'angle de braquage (8) est raccordé à un système de bus (42) de l'électronique de freinage (40, 43).

4. Dispositif de freinage pour véhicule selon la revendication 1, **caractérisé en ce que** le capteur de vitesse de lacet et le capteur d'accélération transversale sont regroupés pour former un module de capteurs (35).

5. Dispositif de freinage pour véhicule selon la revendication 1, **caractérisé en ce que** l'électronique de dynamique de conduite (41) est intégrée dans l'électronique de freinage (2).
